# EUROPEAN PATENT APPLICATION

(11) **EP 1 122 564 A2**
(43) Date of publication of application: **08.08.2001**
(21) Application number: 01101893.4
(22) Date of filing: 27.01.2001
(51) Int. Cl.: G02B 6/38

(54) **Ferrule for an optical fiber and manufacturing method thereof**

(30) Priority: 31.01.2000 JP 2000027305
(71) Applicant: MOLEX INCORPORATED, Lisle Illinois 60532-1682 (US)
(72) Inventor: Shimotsu, Akihiro, Ebina-shi, Kanagawa (JP)
(74) Representative: Blumbach, Kramer & Partner GbR

(57) **Abstract**

The specification and drawings show and describe an embodiment of the present invention in the form of a ferrule (10) for a fiber optic connector having a capillary (12) for receiving an optical fiber and a flange (14) molded onto an outer surface of the capillary (12). A recess (15) is formed in the outer surface of the capillary (12) prior to the molding process, and a plastic material is injected into a mold (20) containing the capillary (12), forming both the flange (14) and a projecting portion of the flange (14) which extends into the capillary recess (15) . The features of the molded flange (14) are used for positioning and securing the capillary (12) within the fiber optic connector.

## Description

### BACKGROUND OF THE INVENTION

Optical communication systems have characteristics such as low loss, high bandwidth and light weight. Much research has been undertaken with a view to enhancing the performance of optical telecommunication devices from which these systems are constructed. Areas of focus have included the lengthening the service life of semiconductor lasers, decreasing the loss fiber optic cables and improving the performance of basic system elements such as light emitting and light receiving elements.

In order to effectively implement optical communication systems, advances in other technology areas are also important. Several of these technology areas relate to interconnection of the fiber optic elements. For instance, there is the area of light-coupling technology, which addresses the problem of effectively transmitting an optical signal from a light-emitting element into an optical fiber; optical fiber connection technology, which addresses the problem of connecting optical fibers to each other with minimal loss; and optical attenuation technology, which addresses the problem of adjusting the light intensity used in a relay in an optical fiber transmission system.

Optical fiber connection technologies may be categorized into permanent connection methods and detachable connection methods. Of these, detachable connection methods generally involve more complicated techniques than permanent connection methods since the use of a connector involves problems such as detachability, interchangeability, and high-precision positional alignment.

With respect to optical fiber connectors, a variety of structures have been proposed depending on the application involved. A typical example (as described in, for example, Japanese Utility Model Application Laid-Open No. Sho 62-87305, or Japanese Examined Patent Publication No. Hei 3-52603) is a structure in which two ferrules, each containing an optical fiber, are inserted into both end sides of a sleeve-shaped adapter and the fiber ends brought into abutment with each other within the adapter. Also, Japanese Utility Model Application Laid-Open No. Sho 63-96504 discloses a connector to be used in an optical attenuator.

In optical fiber connection technology, it is necessary to bring two fibers into abutment with each other in a coaxial manner in order to connect them with low loss. To this end, the outer dimensions of the ferrules and the inner diameter of the adapter into which the ferrules are inserted should be formed with high precision, and it is necessary to fix the fiber elements along the center axis of the ferrules. The dimensional precision required is on the order of micrometers. As conventional optical fiber ferrules have been manufactured using precision fabricated metal or ceramics, the manufacturing cost of these ferrules has been very high.

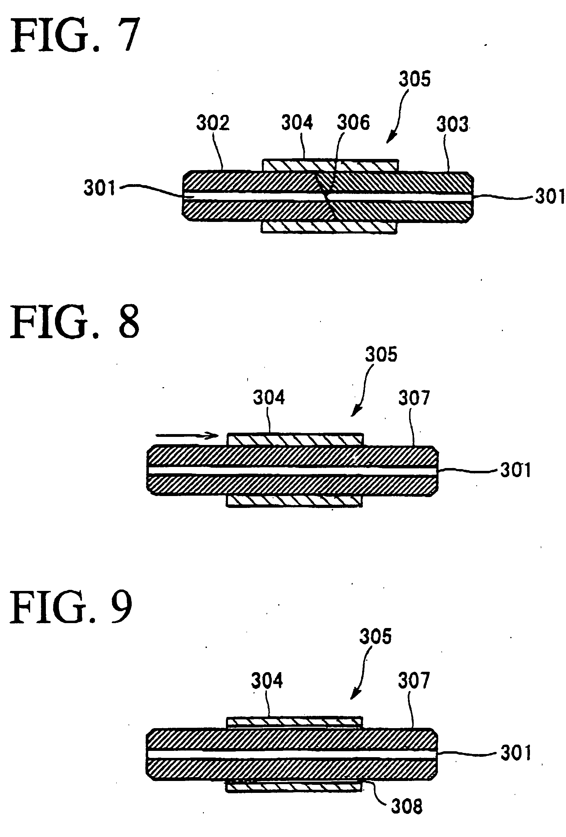

Figs. 7 to 9 show examples of ferrules that have been used as fiber optic attenuators. Since physical contact surfaces may be provided on both ends of the ferrule for an optical attenuator, a so-called double-end exposure type ferrule may be used in which the outer circumferential surfaces of the end portions of the ferrule are exposed. In the example shown in Fig. 7, two capillaries 302 and 303 having holes 301 through which an optical fiber strand is to be inserted are brought into abutment with each other within a metal sleeve 304 to provide a double-end exposure type ferrule 305. In this case, an optical attenuator film (filter) 306 is disposed along the abutment surface between capillaries 302 and 303 to adjust the light intensity. The abutment surface is cut obliquely so that return of light by the attenuator film 306 is prevented. The abutment surface is generally set at an angle of six degrees or more where single mode optical fibers are employed and at an angle of eight degrees or more in the case of multi-mode optical fibers. Although the ferrule 305 shown in Fig. 7 has been frequently used, the manufacturing cost of the ferrule is high due to the stringent dimensional requirements, the nature of the materials from which the parts are fabricated and the need for additional polishing points.

In the example shown in Fig. 8, the filter 306 shown in Fig. 7 is dispensed with and the optical fiber for attenuation is inserted into an insertion hole 301 of a single capillary 307. Then, a sleeve-shaped flange 304 is press-fit onto one end of capillary 307 in the direction of the arrow shown in the drawing. However, when sleeve-shaped flange 304 is press-fit onto capillary 307, the surface of capillary 307 may be damaged or powder-cut. This degrades the dimensional precision of the outer diameter on one side of the capillary.

In order to avoid this problem, as shown in Fig. 9, the inner diameter of the sleeve-shaped flange 304 may be increased so that the sleeve-shaped flange 304 is more easily fit onto one end of the capillary 307. When the flange is positioned as desired relative to the capillary, their positions may be fixed by an adhesive 308 to provide the ferrule 305. However, in this case, the desired axial positioning of the flange along the length of the capillary and the desired radial positioning of the capillary within the flange may be unstable and difficult to achieve, impairing the precision of the final assembly.

To avoid damage to the capillary resulting from use of a press-fit metal flange, the flange may be made from plastic. However, a plastic flange may be damaged during the press-fit operation, resulting in a loss of precision in the assembly and structural weaknesses in the ferrule.

### SUMMARY OF THE INVENTION

An object of the present invention is to address the problems outlined above by providing a ferrule structure and fabrication method which achieves the desired levels of positional and dimensional precision while minimizing manufacturing costs.
According to the present invention, there is provided a ferrule for a fiber optic connector having a capillary for receiving an optical fiber and a flange molded onto an outer surface of the capillary such that the capillary outer surface proximate each opposing end is not covered by the molded flange. With such an arrangement, as the flange is molded onto the outer surface of the capillary, there is no damage to the surface of the capillary during attachment of the flange. Accordingly, precise control of the outer diameter of the capillary is maintained. Furthermore, since the flange is molded directly onto the outer surface of the capillary, the position of the flange with respect to the capillary can be set with a high degree of accuracy and maintained.
Also according to the present invention, a recess portion may be formed in the outer surface of the capillary into which a corresponding projecting portion (formed during molding) of the flange will extend. Alternatively, the projecting portion may be formed in the outer surface of the capillary prior to molding of the flange, and the molding material may fill in a space surrounding the capillary projecting portion during the molding operation. However, it is easier to form the recess portion in the outer surface of the capillary and to form the projecting portion in the flange during molding. With either of these arrangements, it is possible to further ensure the positioning of the flange with respect to the capillary.
For purposes of positioning and securing the ferrule within a fiber optic connector, the flange described above may also incorporate a large diameter portion and a small diameter portion. These portions may be easily formed during the molding process.

The present invention also provides a method for manufacturing a ferrule for an optical fiber connector comprising the step of molding a flange onto an outer surface of a capillary intermediate opposing ends of the capillary such that the capillary outer surface proximate each opposing end is not covered by the molded flange. According to this method, since the flange is molded onto the outer surface of the capillary, the capillary outer surface is left undamaged and the outer diameter of the capillary left unchanged. Furthermore, since the flange is molded from plastic directly onto the outer surface of the capillary, the position of the flange with respect to the capillary can be set with a high degree of accuracy and maintained.

The present invention relates to a ferrule for an optical fiber and a method for manufacturing the ferrule. The ferrule incorporates a molded flange for precisely positioning the optical fiber within a connector body.

### In the accompanying drawings:

Fig. 1 is a plan view of an embodiment of the ferrule of the present invention;
Fig. 2 is a cross-sectional view of the ferrule shown in Fig. 1;
Fig. 3 is a cross-sectional view of a mold used in manufacturing an embodiment of the ferrule of the present invention;
Fig. 4 is the cross-sectional view of the mold shown in Fig. 3 showing the injection of a plastic material into the mold to produce an embodiment of the ferrule of the present invention;
Fig. 5 is a plan view of a connector in which a ferrule according to the present invention may be mounted; and
Fig. 6 is a cross-sectional view of the connector of Fig. 5.
Fig. 7 is a cross-sectional view of one example of a conventional ferrule.
Fig. 8 is a cross-sectional view of a second example of a conventional ferrule.
Fig. 9 is a cross-sectional view of a third example of a conventional ferrule.

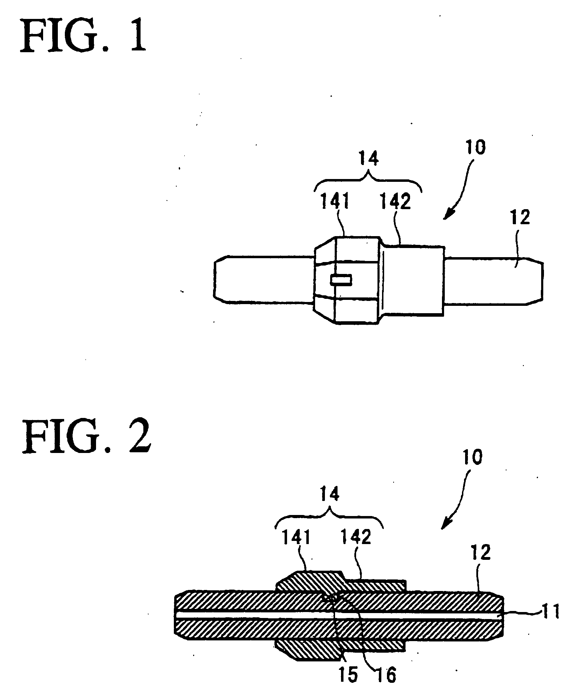

Referring to the drawings, Fig. 1 shows a plan view and Fig. 2 a cross-sectional view of an embodiment of the present invention. A ferrule 10, for incorporation into an optical fiber connector, comprises a capillary 12 and a cylindrical flange 14 molded onto the capillary.

Capillary 12 has a pair of opposing ends, an outer surface extending between the opposing ends and a through hole 11 extending between the opposing ends into which an optical fiber strand is to be inserted. The capillary 12 is made from a well-known material such as zirconia or the like, using a high-precision fabrication process. As seen in Fig. 2, a recess portion 15 is formed in capillary outer surface for receiving a corresponding projecting portion 16 of a molded flange, in a manner to be described later. An attenuating optical fiber (not shown) is to be inserted into hole 11, positioned and fixed in place by application of a suitable adhesive or the like into hole 11. In a manner known in the art, the optical fiber secured within capillary 12 is configured for attenuating light transmitted between two additional optical fibers (not shown) which abut respective opposing ends of capillary 12 and are properly aligned with the attenuating optical fiber.

A plastic flange 14 is molded onto capillary outer surface. Flange 14 is positioned intermediate the capillary opposing ends such that the capillary outer surface proximate each opposing end is left uncovered by the molded flange. In the example shown in the drawings, the overall length of flange 14 is about one third of the length of capillary 12 and flange 14 is positioned approximately midway between the capillary opposing ends. For purposes of positioning and securing ferrule 10 within the body of a fiber optic connector, flange 14 has a large diameter portion 141 and a small diameter portion 142. The overall length of flange 14, the lengths of large diameter portion 141 and small diameter portion 142 and the respective diameters of large diameter portion 141 and small diameter portion 142 can be precisely controlled by appropriate mold design and selection of molding material, to satisfy any number of mounting and positioning requirements. In order to fabricate the precision locating surfaces of flange 14, the molding material used for flange 14 should have sufficient hardness, strength, dimensional stability and also limited mold shrinkage. Examples of suitable molding materials include resins such as PBT containing glass fiber, poly-etherimide, liquid crystal polymer containing glass fiber or the like.

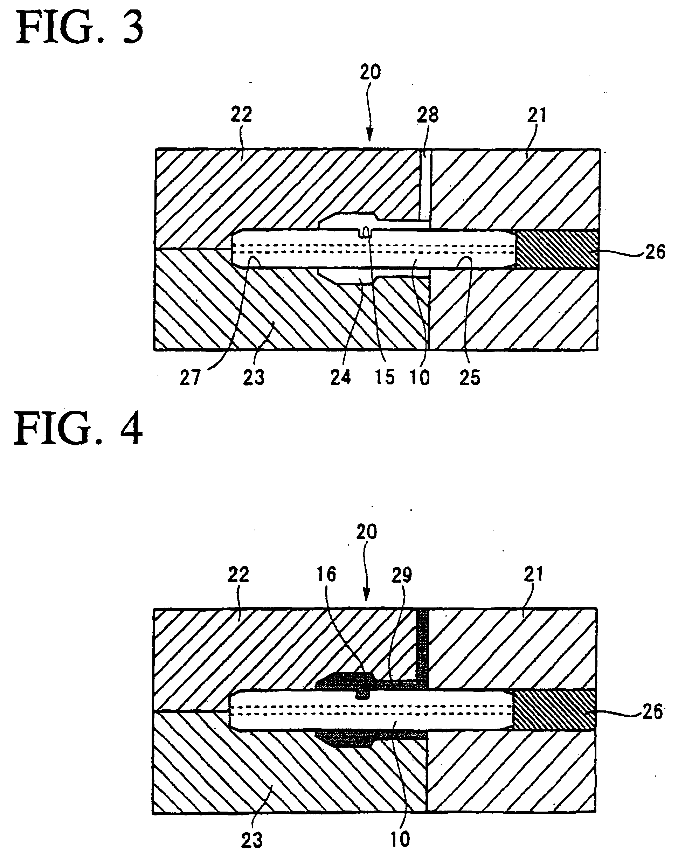

Fig. 3 is a cross-sectional view of a mold 20 used in forming the plastic flange in the above-described embodiment of the present invention. Mold 20 comprises a stationary mold portion 21, a lower mold portion 23 and an upper mold portion 22 which may be moved up and down. Mold portions 21, 22 and 23 combine to form a cavity 24 for positioning and securing capillary 12 and receiving the flange molding material, thereby defining the shape of flange 14. Stationary mold portion 21 has a first end holding hole 25 for inserting and positioning a first end of capillary 12. A second end holding hole 27 for holding the opposite end of capillary 12 is formed by joining upper and lower mold portions 23 and 22, respectively. A movable member 26 is provided which extends into first end holding hole 25 for forcing the opposite end of capillary 12 fully into second end holding hole 27 prior to molding, and for forcing capillary 12 out of first end holding hole 25 after molding. An injection hole 28 is provided in upper mold portion 22 for injecting molten resin into cavity 24.

Fig. 4 is a cross-sectional view of the mold of Fig. 3 showing the injection of a plastic material 29 into mold 20 to produce an embodiment of the ferrule of the present invention. Prior to injection of the plastic, capillary 12 is inserted into stationary mold portion 21. Stationary mold portion 21 is placed into a mold base adjacent lower mold portion 23 and upper mold portion 22 is placed atop lower mold portion 23 and secured. Subsequently, as shown in Fig. 4, the molten plastic 29 is injected into cavity 24 through injection hole 28. When molten plastic 29 is injected, plastic 29 advances into the mold to fill the interior of cavity 24, simultaneously filling recess portion 15. Thus, projecting portion 16, which extends intimately into the recess portion 15, is formed integrally with molded flange 14. After cooling of the molten plastic, ferrule 10 is removed from the mold and an attenuation optical fiber is inserted into hole 11 of capillary 12 and secured therein using adhesives or the like, as described above. The end faces of the optical fiber at the opposing ends of capillary 12 are then prepared by polishing as desired, in a manner known in the art.

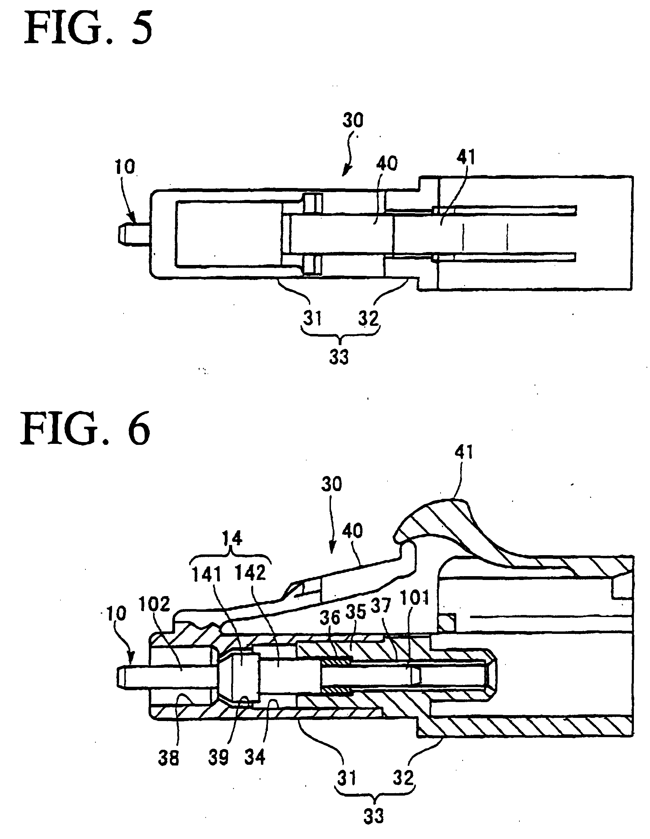

Figs. 5 and 6 show the mounting of the ferrule of the present invention in a an optical connector. Ferrule 10 is mounted within a connector body 33 of a connector 30. Connector body 33 comprises a first body portion 31 and a second body portion 32 connected to each other in an axial manner.

A first reception portion 34 for receiving flange 14 of ferrule 10 is provided within first body portion 31. First reception portion 34 has a large diameter reception portion 39 for receiving large diameter portion 141 of ferrule 10, in a manner to be described later. A second reception portion 38 is provided in the first body portion 31 in the vicinity of the first reception portion 34, for receiving an exposed portion 102 of capillary 12 at the opposite end of the ferrule large diameter portion 141 of ferrule 10 is received within large diameter reception portion 39, and small diameter portion 142 of ferrule 10 is received within an inner circumferential surface of insertion sleeve 35, thereby effecting two-stage holding of ferrule 10 within connector body 33. First body portion 31 also includes a locking member 40.

An insertion sleeve 35 is provided in second body portion 32 for insertion into first reception portion 34 of first body portion 31. A first end of ferrule 10 is inserted into insertion sleeve 35 and is held within insertion sleeve 35 through a ring-shaped spacer 36. Insertion sleeve 35 is longer than an exposed portion 101 of capillary 12 at one end of the capillary. Accordingly, a second capillary portion of a ferrule mounted on another connector (not shown), such as a receptacle or the like, may be inserted into the opposite end of insertion sleeve 35 from and connected to effect coaxial alignment of the respective optical fibers. In order to coaxially align capillary 12 and the second capillary, a second sleeve 37 is provided within insertion sleeve 35. Second body portion 32 also includes a locking member 41.

In an alternative embodiment of the ferrule of the present invention, the projecting portion may be formed in the outer surface of the capillary prior to molding of the flange, and the molding material may fill in a space surrounding the projection portion during the molding operation. In an additional embodiment, rather than having a large diameter portion and a small diameter portion, the molded flange may have a uniform outside diameter. The molded flange may also be formed in a wide variety of alternative shapes to satisfy a variety of ferrule mounting and positioning requirements.

It should be understood that the preceding is merely a detailed description of one embodiment of this invention and that numerous changes to the disclosed embodiment can be made in accordance with the disclosure herein without departing from the spirit or scope of the invention. The preceding description, therefore, is not meant to limit the scope of the invention. Rather, the scope of the invention is to be determined only by the appended claims and their equivalents.

## Claims

1. A ferrule (10) for an optical fiber connector comprising:
a capillary (12) having a pair of opposing ends, an outer surface extending between the opposing ends and a hole (11) extending between the opposing ends for insertion of an optical fiber strand therein;
a flange (14) molded onto the capillary outer surface intermediate the capillary opposing ends such that the capillary outer surface proximate each opposing end is not covered by the molded flange (14).

2. The ferrule (10) of claim 1, wherein the flange (14) is molded from a plastic material.

3. The ferrule (10) of claim 1, further comprising a recess portion (15) and a complementary projecting portion (16) extending into the recess portion (15), the recess portion (15) and projecting portion (16) being formed at an interface between the capillary outer surface and the flange (14).

4. The ferrule (10) of claim 3, wherein the recess portion (15) is formed in the capillary outer surface and the projecting portion (16) is formed integral with the flange (14).

5. The ferrule (10) of claim 3, wherein the recess portion is formed integral with the flange (14) and the projecting portion is formed in the capillary outer surface.

6. The ferrule (10) of claim 1, wherein the flange (14) has a cylindrical outer surface comprising a large diameter portion (141) and a small diameter portion (142).

7. A method for manufacturing a ferrule (10) for an optical fiber connector comprising the step of molding a flange (14) onto an outer surface of a capillary (12) intermediate opposing ends of the capillary (12) such that the capillary outer surface proximate each opposing end is not covered by the molded flange (14).

8. The method for manufacturing a ferrule (10) according to claim 7, further comprising the steps of:
forming a recess portion (15) in the outer surface of the capillary (12) prior to molding; and
forming, integral with the flange (14), a complementary projecting portion (16) that extends intimately into the recess portion (15) of the capillary outer surface during molding of the flange (14).

9. The method for manufacturing a ferrule (10) according to claim 7, further comprising the steps of:
forming a projecting portion in the outer surface of the capillary (12); and
filling a space surrounding the projecting portion with a molding material during molding.
